(19) Europäisches Patentamt
European Patent Office
Office européen des brevets

(11) **EP 4 596 457 A2**

(12) **EUROPEAN PATENT APPLICATION**

(43) Date of publication:
**06.08.2025 Bulletin 2025/32**

(21) Application number: **24217348.2**

(22) Date of filing: **04.12.2024**

(51) International Patent Classification (IPC):
***B65G 15/32*** *(2006.01)*

(52) Cooperative Patent Classification (CPC):
**B65G 15/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.01.2024 US 202463618043 P**

(71) Applicant: **ContiTech Deutschland GmbH**
**30175 Hannover (DE)**

(72) Inventors:
• **Podias, Stavros**
**30175 Hannover (DE)**

• **Dr. Seibold, Sebastian**
**30175 Hannover (DE)**
• **Dr. Minkin, Andrey**
**30175 Hannover (DE)**
• **Bäuerle-Müller, Christel**
**30175 Hannover (DE)**
• **Kantorek, Frank**
**30175 Hannover (DE)**
• **Bachir, Mohamad**
**Fairlawn, 44333 (US)**
• **Brown, Donald**
**Fairlawn, 44333 (US)**

(74) Representative: **Preusser, Andrea**
**Continental Aktiengesellschaft**
**Intellectual Property**
**Postfach 169**
**30001 Hannover (DE)**

(54) **CONVEYOR BELTS ON THE BASIS OF THERMOPLASTIC ELASTOMERS AND POLYOLEFIN BASED FABRICS**

(57) The present invention is concerned with conveyor belts comprising a fabric layer containing polyolefin yarns or a polyolefin fabric, a layer of thermoplastic elastomer cover material, and an adhesion laminate bonding both materials together, wherein the adhesion laminate comprises at least two components, which are arranged as respective layers. The present invention is further concerned with methods for the production of respective conveyor belts and the use of an adhesion laminate comprising at least two components, which are arranged as respective layers, to prepare a conveyor belt having a thermoplastic elastomer cover material and a layer of fabric containing polyolefin yarns or a polyolefin fabric.

Figure 1

EP 4 596 457 A2

**Description**

The present invention is concerned with conveyor belts comprising a fabric layer containing polyolefin yarns or a polyolefin fabric, a layer of thermoplastic elastomer cover material, and an adhesion laminate bonding both materials together, wherein the adhesion laminate comprises at least two components, which are arranged as respective layers. The present invention is further concerned with methods for the production of respective conveyor belts and the use of an adhesion laminate comprising at least two components, which are arranged as respective layers, to prepare a conveyor belt having a thermoplastic elastomer cover material and a layer of fabric containing polyolefin yarns or a polyolefin fabric.

State of the art

Conventional conveyor belts today are produced with bodies of an elastomeric material and reinforcing elements for tensile reinforcement in the length direction, where pulling forces are applied during use. In most cases, these elements are cords or fabrics on the basis of polyester or polyamide (including polyaramide) fibers or steel cables, onto which the elastomer is applied from both sides to provide the body and thereafter vulcanized to consolidate the construction. Obviously, such belts cannot easily be recycled as the different materials have to be separated and the vulcanized rubber cannot be recycled in the regular sense since the crosslinking effected by vulcanization is not reversible. This leads to a situation, where recycling is usually not economically feasible, so that the belts are only used as a feedstock in "thermal recycling".

A possible means to avoid the problems of reusability of vulcanized materials is to use thermoplastic elastomers ("TPE") for the carcass of the belt, as these materials can be remolten and thus more easily be separated from reinforcement materials. Such belts can e.g. be produced by extruding the thermoplastic elastomer onto the reinforcing element (or elements) followed by cooling to provide the respective reinforced belt.

As an alternative, non-reinforced belts are known (e.g. in the food industry), which avoid the problem of material separation altogether. These belts are mostly made of polyurethane, but due to the lack of reinforcement have a tendency to stretch while in use, which results in manufacturing shutdowns where the conveyor lines are stopped to allow for reworking the belt to take up excessive slack. In addition, such belts can only be used for applications, where the belting is not exposed to significant deforming forces.

WO 2021/188760 A1 describes a reinforced food grade belt, which is formed from an elastomeric belt body material and a plurality of thermoplastic synthetic filaments, which extend in the length direction of the belt. These belts are described as being beneficial both in terms of having reinforcement and complying with safety protocols for food grade compliance. In WO 2021/188760 A1, the belt construction is such in that the thermoplastic synthetic filaments have a melting point, which is below the melting point of the thermoplastic elastomer. Due to this configuration, WO 2021/188760 A1 claims that the applied thermoplastic elastomer is molten into the belt when belt ends are connected together to form a continuous loop belt. However, in practice, the production of such belts is relatively complex, as it has to be ensured that the filaments do not completely melt or recrystallize, which would compromise the strength of the belt.

US application No. US 63/218,500 describes reinforced elastomer parts comprising a reinforcement member and a layer made of thermoplastic elastomer, where the materials of the reinforcement member and the thermoplastic elastomer are compatible to the extent that they can be processed to form a homogeneous single-phase or multi-phase mixture above the melting temperature of the materials. This construction allows for a uniform processing of the parts in a melting recycling process without the necessity for elaborate separation of different materials of the elastomer parts.

WO 2023/180515 A1 describes a reinforced elastomer component with a strength carrier made of thermoplastic polymer and a matrix or support made of thermoplastic elastomer, wherein the strength carrier is formed from a polymer material which can be processed with melting with the melting phase of the thermoplastic elastomer to a homogeneous single-phase or multiphase mixture.

Recently, the inventors have developed reinforced belts (not yet published), which comprise an upper thermoplastic elastomer layer, a reinforcing fabric and a lower thermoplastic elastomer layer, wherein the fabric is positioned between the upper and lower elastomer layers and comprises polyolefin yarns. Such belts have the advantage, that after the belt has exceeded its regular use time the thermoplastic elastomer can be compounded with the polyolefin reinforcement material without relevant detrimental effect on the mechanical properties of the elastomer and that such belts provide favorable characteristics for light to heavy duty applications (belt strength classes 400 N/m or more) as e.g. in paper or agricultural products. In such belts, it is not necessary to separate reinforcement elements from thermoplastic elastomer, which significantly simplifies the recycling process.

For these belts, the problem has occurred however that the attachment of the reinforcing fabric is quite challenging, if such attachment is performed by surface melting of the thermoplastic elastomer layer. In such processes, when the polyolefin or polyolefin yarn containing fabric is applied thereon the reinforcement is exposed to higher temperatures, whereupon the characteristics of the polyolefin reinforcement may deteriorate (e.g. due to degradation or a loss in crystallinity of UHMWPE). Accordingly, there is a need for effecting an attachment of a polyolefin reinforcement material to a thermoplastic elastomer conveyor belt cover, which does not expose the polyolefin reinforcement material to conditions where the mechanical properties deteriorate to a relevant degree. In addition, these is a need for a process, which is easy to implement and which can be performed in a continuous manner to provide respective laminates.

The present application addresses these needs.

Description of the invention

In the investigations, which are underlying the present invention, it has been found that an adhesive laminate, which has at least two layer, and where the layers are composed of a respective adhesive materials is particularly suitable for the production of conveyor belts with thermoplastic elastomers and reinforcement fabrics, which are based on polyolefins. Such adhesives can be molten and can then attach itself to the respective cover material and fabric layer while avoiding overexposure or prolonged exposure of the fabric to high temperatures. In addition, the layer arrangement allows an easy fabrication of laminate of the fabric and thermoplastic elastomer cover material, as all constituents for the production of the later laminate can be provided on rolls, and continuously guided to a lamination device, where the layers can then be attached to one another.

Accordingly, in a first aspect, the present application concerns a conveyor belt comprising a fabric layer containing polyolefin yarns or a polyolefin fabric, a layer of thermoplastic elastomer cover material, and an adhesion laminate bonding both materials together, wherein the adhesion laminate comprises at least two components, which are arranged as respective layers.

In one embodiment, the respective layers have a melting temperature which is less than the melting temperature of the polyolefin in the fabric and the thermoplastic elastomer cover material.

The thermoplastic elastomer of the cover material is not subject to any relevant restriction, except that it must be remeltable and sufficiently stable under regular use condition (e.g. at temperatures in a range of about -30 to 60°C). The thermoplastic elastomer is preferably based on a thermoplastic elastomer which is miscible with the polyolefin of the fabric. Accordingly, the thermoplastic usually is not based on a fluoropolymer or perfluorinated polymers, which do regularly not meet this requirement. Preferred thermoplastic elastomer inventive belt comprise a non-fluoropolymer thermoplastic vulcanizate, a thermoplastic polyolefin or a thermoplastic polyurethane as base material.

Suitable materials, which meet this requirement include in particular thermoplastic polyolefin, thermoplastic vulcanizate, ethylene acrylate rubber (AEM), acrylate rubber (ACM), preferably in combination with polyamide and thermoplastic polyurethane elastomer. Particularly suitable materials for the thermoplastic elastomer include EPDM (ethylene propylene diene rubber) or mixtures thereof with polyolefins, preferably in the form of polypropylene. Such mixtures can be used as TPO (thermoplastic polyolefin) or TPV (thermoplastic vulcanizate = crosslinked "thermoplastic polyolefin"). A particularly suitable polypropylene which can be used in such blends is, for example, a polypropylene with a density of 0.90 to 0.91 $g/cm^3$.

An ethylene-propylene-diene rubber having an ethylene content in the range of 45 to 75% by weight and particularly 45 to 55% by weight is preferred as the EPDM. The diene content here is suitable in the range from 0.1 to 12% by weight, preferably in the range from 2 to 10% by weight and particularly preferably in the range from 3 to 9% by weight. Any dienes used in EPDM can be used here as dienes, with cyclopentadiene, ethylidene norbornene and 1,4-hexadiene being preferred dienes.

In a particularly preferred embodiment, the thermoplastic elastomer is a thermoplastic polyurethane elastomer which is constituted from TDI (toluylendiisocyanate) and/or MDI (methylenebisphenyldiisocyanate) and a least one polymeric polyol. In the thermoplastic polyurethane elastomer the polymeric polyol is suitably selected from polyester polyols, preferably on the basis of adipic acid, and polyether polyols, preferably on the basis of polytetrahydrofurane. The dialcohol component in the polyester polyol is usually an aliphatic dialcohol such as ethylene glycol, 1,3-propandiol, 1,4-butandiol or a respective $\alpha,\omega$-diol of a linear or branched C4 to C10-alkane.

The thermoplastic elastomer can also contain conventional additives, such as fibers or fillers for reinforcement purposes, or formulation auxiliaries. However, the thermoplastic elastomer and/or the thermoplastic polymer preferably contain such components in a proportion of up to 40% by weight at most, for example in a proportion of 10 to 30% by weight. Furthermore, it is preferred that the inventive conveyor belt does not contain any components that counteract an intimate mixing of the components of the thermoplastic elastomer and the fabric comprising polyolefin yearn of the polyolefin fabric.

The yarns in the fabric, which are oriented in the length direction of the conveyor belt suitably have a tensile strength which is higher than the tensile strength in the width direction by at least 10%. Moreover, preferably the yarns in the length direction are oriented such that they do not twist against the straight line of extension by an angle of more than 30°.

The thermoplastic elastomer and the polyolefin in the polyolefin yarns are sufficiently miscible and compatible so that on melting they can form a homogenous mixture and can be homogenized with one another in the melt to provide either a single-phase mixture or at least a sufficiently stable dispersion of one material in the other material, which may have several (= two or more) phases. The materials of the fabric and of the thermoplastic elastomer are preferably matched to one another in such a way, that only one phase forms in the melt.

The presence of a single phase in the mixture can be detected, for example, by means of DSC, where only one melting range without two distinguishable melting points is detected. Accordingly, the skilled person in the art is readily able to determine an appropriate combination of materials for the thermoplastic elastomer and the polyolefin in the yarns of the fabric using his or her background knowledge and, if necessary, some experimentation to determine the miscibility of the materials.

The fabric preferably further preferably has a tensile strength in the length direction of the belt, determined according to DIN EN ISO 13934-1, of at least 100 N/mm, and more preferably in the range from 400 N/mm to 4000 N/mm. In addition, it is preferred that the tenacity of the yarns in the warp direction is higher by at least 10% than the tenacity of the yarns in the weft direction, where more preferably the difference in the tenacity is 100% or more and even more preferably 200% or more, where the tenacity is given in cN/tex as determined by DIN EN ISO 5079:2021. In one embodiment, the difference in the tenacity is 1000% or less. Concerning absolute values, in one embodiment the yarns in the warp direction have a tenacity of 15 cN/dtex or more, preferably of 20 to 50 cN/dtex and more preferably of from 25 to 40 cN/dtex and the yarns in the weft direction have a tenacity of 13.5 cN/dtex or less, preferably of 2 to 12 cN/dtex and more preferably of from 4 to 10 cN/dtex.

In one embodiment, the yarns in the fabric which extend in the length direction of the belt (as designated as warp direction) are based on a material which provides a higher tensile strength than the yarns which are provided in the width direction (as designated as weft direction), where the difference between the two is at least 10%. For the comparison of the respective tensile strength, the tensile strength is determined according to DIN EN ISO 2062.

In addition, it is preferred that the yarns, which extend in the length direction of the belt, are substantially straight in the length direction, with a minimal level of crimp, preferably with a crimp level of less than 1%. In this manner, it can be ensured that the fabric provides the strength in the length direction directly when it is stressed and there is no offset, which results from bringing the yarn, which is twisted around a straight line of the direction of extension, into a straight line. Here the angle indicates the maximum of the twist of the yarn towards the length direction. In a

The polyolefin yarns can be made of any polyolefin, which is suitable for the production of fibers and/or yarns. Preferably, the polyolefin yarns are based on polyethylene and/or polypropylene, as these are the most readily available polyolefins and they can be blended into one another to provide a homogeneous or substantially homogeneous mixture. In one embodiment, the fabric has polyethylene yarns in the length and width direction, where the yarns in the width direction have a tensile strength which is at least 10% less than the tensile strength in the length direction. In another embodiment, the fabric has polypropylene yarns in the length and width direction, where the yarns in the width direction have a tensile strength which is at least 10% less than the tensile strength in the length direction. In a particularly preferred embodiment, the fabric has polyethylene yarns in the length direction of the belt and polypropylene yarns in the width direction of the belt.

The polyethylene in the polyethylene yarns is preferably a polyethylene with a molecular weight of at least 1,000,000 g/mol and more preferably with a molecular weight Mw of from 2,000,000 to 6,000,000 g/mol. Such molecular weight is generally referred to as UHMWPE. The molecular weight Mw in this case is determined via the intrinsic viscosity ("IV", as measured on solution in decalin at 135°C), which is a measure for the molecular weight, but can more easily be determined than actual molecular weight parameters like $M_n$ and $M_w$. There are several empirical relations between IV and Mw. For the purposes of this invention, the molecular weight $M_w$ is calculated from the intrinsic viscosity via the empirical equation $M_w = 5.37 * 10^4 [IV]^{1.37}$ (see EP 0504954 A1).

UHMWPE yarns are particularly favorable as they provide a typical high tensile strength of 528 N to 636 N per single yarn (at a linear density of 1760 dtex) when tested according to ISO 2062. Accordingly, UHMWPE yarns are preferably used as yarn in the length (or warp) direction of the belt.

Polypropylene yarns for the use in this invention preferably provide a tensile strength of from 60 N to 300 N per single yarn (at a linear density of 930 to 4400 dtex, respectively), which is sufficiently lower than the tensile strength of the UHMWPE yarns. Accordingly, polypropylene yarns are preferably used in the width (or weft) direction of the belt.

The linear density of the yarns in the fabric, which is used for reinforcement in the reinforced belts of the invention is not subject to any relevant restrictions, as long as the yarn provides the required strength to the fabric and belt, into which it is incorporated. Here, the linear density of the yarns especially in the length (or warp) direction of the fabric can be varied over a broad rage, but preferably is from 220 to 3600 dtex and more preferably from 1760 to 3520 dtex. Likewise, the linear density of the yarns in the width (or weft) direction of the fabric in the belt can be varied in a broad range and preferably is within the range of 930 to 8500 dtex.

The yarns can be formed from one single yarn or a multitude of single yarns, which are plied and twisted together. The single yarns in either case preferably have a linear density in the length direction of from 220 dtex to 3300 dtex and more preferably from 1760 to 2640 dtex. Irrespective of whether the yarns in the width direction are formed from a single yarn or a multitude of single yarns, the single yarns in the width direction preferably have a linear density of from 930 dtex to 4400 dtex.

The yarn in both the length and width direction can be a single yarn or can be assembled from multiple single yarns, which are cabled or twisted together to provide the yarn. In one embodiment, the yarns in the length and/or the width direction are constituted from 1 to 10 single yarns and preferably from 1 to 5 single yarns. In a particularly preferred embodiment, the yarns in the length and the width direction are constituted from 1 to 5 single yarns. If the yarn is constituted from more than one single yarn, the yarn can also be designated as a secondary yarn, which is constituted form the primary single yarns.

The fabric can have any suitable weaving pattern, and it is possible that the yarns, which are oriented in the warp direction have a higher tensile strength than the yarns which are predominantly oriented in the weft direction. In one embodiment, the weaving pattern is a single layer, double layer or multiple layer pattern. In a preferred embodiment, the weaving pattern is a weaving pattern with a straight warp design or a 3D weaving design. Here 3D weaving indicates a fabric having substantially straight yarns in the warp and weft direction, which further comprises yarns designated as "Z-yarns", which fix the crossed warp and weft yarns on one another via a zig-zag weaving pattern.

The yarns providing the fabric and especially the yarns, which in the fabric provide the warp yarns, can be twisted or non-twisted yarns, where a twisting in the range of from 0 to 300 turns per meter (tpm) is preferred and a twisting of from 25 to 80 tpm is more preferable. When the yarns are twisted yarns, this has the effect of increasing the bundle integrity, especially for the weaving process. In addition, with an optimized twist of the single yarns, the dynamic properties of fabrics can be increased. Multiple twisting arrangements for assembled yarns are also possible.

As noted above, the yarns in the warp direction in a preferred embodiment are yarns of UHMWPE. In addition or in alternative thereto, it is preferred that the yarns are oriented that they do not twist against the straight line of extension by an angle of more than 25°, more preferably not more than 20° and even more preferably not more than 10°. As noted above, this design ensures that the belt provides a high tensile strength and low elongation even at low tensile stresses of about 10% of the breaking strength.

Another factor, which may be used for the characterization of yarns, is the twist factor, which is a measure of the degree of twisting of a yarn. The twist factor K of the plied yarn (or more precisely of the elementary filaments constituting said plied yarn) is proportional to the twist angle and is expressed according to the following relation:

$$K = (\text{twist in turns/meter}) \times [\text{linear density of strand (unit: dtex)} / (10000 \cdot \rho)]^{1/2}$$

Here, the twist is expressed as the number of turns per meter, the linear density is expressed as dtex (weight of 10000 meters of the strand in grams), and $\rho$ is the density or mass per unit volume of the material from which the plied yarn is made in units of $g/cm^3$ (approximately 0.94 for UHMWPE and 0.91 for polypropylene).

The filaments constituting a multifilament yarn made of UHMWPE, which is preferred for use in the inventive reinforced belt of fabric, are preferably twisted together with a twist factor between 5 and 90, more preferably between 10 and 50. Further, it is preferred that the yarns have a twist level of between 25 turns/m and 150 turns/m, more preferably between 25 turns/m and 50 turns/m,

The filaments constituting a multifilament yarn made of high tenacity polypropylene, which is preferred for use in the inventive reinforced belt of fabric, are preferably twisted together with a twist factor comprised between 10 and 100, preferably between 20 and 65. Further, it is preferred that the yarns have a twist level of between 25 turns/m and 150 turns/m, preferably between 50 turns/m and 80 turns/m.

The yarns can be S twisted or Z twisted. In some instances, a combination of alternating S and Z twist, or solely S or Z twisting can be used.

The adhesion laminate in the inventive conveyor belt is composed of two components, which are arranged in separate layers onto one another. Preferably, the components are selected such, that one component has a higher melting point than the other component.

The components are further or in alternative suitably selected such that they provide good adhesion to the layer of the conveyor belt to which they face (i.e. either the fabric layer containing polyolefin yarns or a polyolefin fabric or the thermoplastic elastomer cover material). The material of the fabric layer is different from the material of the thermoplastic elastomer cover material, the components of the adhesion layer are different materials. In the case, where one of the thermoplastic elastomer cover material is based on thermoplastic polyurethane elastomer, it is preferred that the component of the adhesion laminate facing towards this material is also based on polyurethanes. On the other hand, the component of the adhesion layer facing towards the fabric is most suitably also a polyolefin, e.g. particularly polypropylene or a modified polypropylene.

Whereas two layers adhesion laminate can suitably be prepared by lamination of layers of the respective components onto one another, given that the components are molten for attachment to the respective thermoplastic elastomer cover material or fabric layer containing polyolefin yarns or a polyolefin fabric, it is preferred that the adhesion layer is provided with a middle support layer which is not molten during the processing and preparation of the conveyor belt. Thus, in a particularly preferred embodiment, the adhesion laminate comprises three layers with an inner support layer and outer adhesive layers. The outer adhesive layer here correspond to and comprise the components as described above.

In such construction, as noted above, the adhesive layer, which is oriented towards a thermoplastic elastomer on the basis of a thermoplastic polyurethane, preferably comprises a polyurethane adhesive, and the adhesive layer, which is oriented towards the polyolefin yarns or polyolefin fabric, comprises polypropylene or a modified polypropylene.

For the adhesion layer, it is important that the respective components can be molten without significant melting of the fabric layer containing polyolefin yarns or a polyolefin fabric or the thermoplastic elastomer cover material. In this regard, it is not necessary that the components themselves have melting points of below the melting point of the respective layer, to which they are attached, but it must be possible to melt the same by applying heat thereto without significant heating of the cover or fabric layer. To this end, it is preferred that adhesive layers and/or components of the adhesion layer have a melting point less than 300°C, preferably less than 280°C, and more preferably less than 250°C.

For the three layer adhesion laminate, which has an inner support layer, it is furthermore preferred that the inner support layer it is composed of a material having a melting point, which is at least 10°C, preferably at least 20°C and more preferably at 25 to 50°C higher than the melting point of the components in the outer adhesive layers. A particularly suitable material, which can meet this requirement is polyamide, so that the inner support layer is preferably based on polyamide (i.e. preferably, the content of polyamide in the inner support layer is at least 80 wt.-%, more preferably at least 90 wt.-% and even more preferably at least 95 wt.-%).

Suitable polyamides, which can be used in the inner support layer include polyamides selected from polyamide 6, polyamide 6.6, polyamide 6.9, polyamide 6.12, polyamide 11, polyamide 12, polyamide 4.6, polyamide 6.12 and polyamide 10.10. Particularly preferred polyamides for use in the inner support layer are polyamide 6, polyamide 6.6 and polyamide 6.12.

The form of the inner support layer is not subject to any relevant limitation, i.e. it is not important if the layer is continuous as in a film or has perforations including perforations as in a fabric. Thus, it is possible that the inner support layer is a fabric.

A particularly preferred conveyor belt according to the instant invention comprises a middle fabric layer containing polyolefin yarns or a polyolefin fabric, and outer layers of thermoplastic elastomer cover material on both sides thereof, wherein the respective layers are bonded to each other with respective adhesion laminates comprising at least two components, which are arranged as respective layers. I.e. in such conveyor belt, the thermoplastic elastomer cover material is provided on both outer faces thereof and the fabric is provided in the middle of the belt. In this way, the fabric can effectively reinforce the belt and during use is not exposed to the outer environment, where it could be damaged.

The inventive conveyor belt further preferably has a fast attachment of the fabric layer to the thermoplastic elastomer cover material which is such, that the peel strength between the thermoplastic elastomer cover material and the fabric containing polyolefin yarns or a polyolefin fabric is at least 3,5 N/mm, preferably at least 4.0 N/mm and more preferably in the range of 4.2 to 20 N/mm. a particularly suitable an effective peel strength is in the range of from 4.5 to about 12 N/mm.

The inventive conveyor belt can be prepared by any process, which the skilled practitioner can come up with for the preparation of corresponding belts. A particularly effective process for the production of respective belts comprises the following steps:

    i) providing a thermoplastic elastomer cover material;
    ii) providing a fabric containing polyolefin yarns or a polyolefin fabric;
    iii) positioning an adhesion laminate comprising at least two components, which are arranged as respective layers, between the thermoplastic elastomer cover material and the fabric containing polyolefin yarns or a polyolefin fabric;
    iv) attaching the thermoplastic elastomer cover material to the fabric containing polyolefin yarns or polyolefin fabric by lamination.

However, the sequence, by which the adhesion laminate is attached to the thermoplastic elastomer cover material or the fabric containing polyolefin yarns or a polyolefin fabric is not of relevant importance, so that the adhesion laminate can be attached to either of the thermoplastic elastomer cover material or the fabric containing polyolefin yarns or a polyolefin fabric in a first step and to the respective other in a second step. Accordingly, another suitable process for the preparation of inventive conveyor belts is a process with the following steps:

    i) providing a thermoplastic elastomer cover material;
    ii) positioning an adhesion laminate comprising at least two components, which are arranged as respective layers, on the thermoplastic elastomer cover material and attaching the adhesive laminate to the thermoplastic elastomer cover material by lamination to provide a first composite laminate;
    iii) positioning a fabric containing polyolefin yarns or a polyolefin fabric over the adhesive side of the first composite laminate;
    iv) laminating the fabric to the first composite laminate to provide a second composite laminate.

In a yet further alternative, a process for the preparation of inventive conveyor belts can have the following steps:

a) providing a fabric containing polyolefin yarns or a polyolefin fabric;

b) positioning an adhesion laminate comprising at least two components, which are arranged as respective layers, on the fabric containing polyolefin yarns or a polyolefin fabric and attaching the adhesive laminate to the fabric containing polyolefin yarns or a polyolefin fabric by lamination to provide a first composite laminate;

c) positioning thermoplastic elastomer cover material over the adhesive side of the first composite laminate;

d) laminating the fabric to the first composite laminate to provide a second composite laminate.

For all of the above indicated processes it is preferred that the process can be run continuously, i.e. with a continuous feed with the respective layers and with a continuous output of finished conveyor belt. Whereas the fabrication of inventive conveyor belts is also possible in a batch wise manner, this is not preferred as the operation of a batch wise process is more complex. For a continuous production process, the thermoplastic elastomer cover material, the fabric containing polyolefin yarns or a polyolefin fabric and the adhesion laminate are suitably provided as continuous strands and are arranged and fed to a continuous lamination process.

In the process of attaching the adhesion laminate to the fabric containing polyolefin yarns or a polyolefin fabric, it has turned out that the application of high temperature for a short period of time provides for better adhesion results than the application of a lower temperature for a longer period of time. This can be observed from higher peel strength, which is obtained with the use of higher temperatures. While this has not been verified by experimental tests, it is believed that the exposure of the polyolefin yarns in the fabric to elevated temperature for a longer period of time has a more detrimental impact on the fiber structure than the exposure to higher temperatures for a short time. Accordingly, in the inventive process, it is preferred that the lamination is performed at a temperature of about 180 to 250°C, preferably of about 200 to 240°C and more preferably of about 210 to 230°C.

In addition, as noted above, the exposure to elevated temperatures is preferably short, so that the lamination at the elevated temperatures is preferably performed by pressing the layers together for a time of from 2 to 60 sec and more preferably of from 4 to 30 sec.

The pressure during the lamination also has some impact on the lamination results, as with a higher pressure the contact is increased even if the component in the adhesion laminate or the adhesive layer is not fully molten. Favorable lamination results here can be achieved if the pressure during lamination is from 3 to 7 bar and preferably from 3.5 to 6 bar.

In this regard, it must further be noted that the condition of attaching the adhesion laminate to the fabric layer are the more critical condition, as the heat is directly applied to the fabric layer. The mechanical characteristics of this layer are more sensitive towards heat than the characteristics of the thermoplastic elastomer cover material. Accordingly, it is possible to attach the adhesion laminate to the thermoplastic elastomer cover material under milder conditions than noted above, where the thermoplastic elastomer cover material is e.g. heated to a temperature of about 120 to 150°C and the lamination is performed for a time of about 2 to 10 and preferably 3 to 8 minutes.

A further suitable process, which can be used to laminate the adhesion laminate and the fabric layer, is a process, where the adhesive laminate is selectively heated at its surface and the fabric is subsequently contacted and laminated with the adhesion laminate at a lower temperature. Such process in particular involves the following steps:

i) blowing the adhesive laminate with a gas at a temperature of at least 300°C, preferably a temperature of from 350 to 600°C,

ii) guiding an arrangement of the adhesion laminate and the fabric containing polyolefin yarns or a polyolefin fabric through a first lamination roller at a temperature of 50°C to 180°C, preferably 80°C to 150°C, and

iii) subsequently guiding the arrangement through a second lamination roller at a temperature of from 10 to 30° and preferably 20 to 25°C.

The gas can be any gas, which is inert towards the layer, to which is it blown, i.e. it can be a noble gas such as argon, nitrogen or even air. For cost purposes the use of air as the gas for blowing the adhesive layer is preferred.

It is evident, that in the above the side of the laminate is blown, which is intended for attachment to the fabric containing polyolefin yarns or a polyolefin fabric.

In addition, since polyolefin surfaces are usually quite inert towards attachment of an adhesive, it is possible to activate the surface of the fabric containing polyolefin yarns or a polyolefin fabric by treatment with plasma, corona, heat, flames or other known treatments, which provide surface activation of polyolefins. Alternative or in addition thereto, the surface can be activated by treatment with a suitable primer, or the fabric layer can be washed prior to attaching the adhesion layer in order to remove dirt, which may have a detrimental impact on the adhesion.

In a yet further aspect, the present invention concerns the use of an adhesion laminate, wherein the adhesion laminate comprises at least two components, which are arranged as respective layers, preferably, wherein the adhesion laminate comprises three layers with an inner support layer and outer adhesive layers, to prepare a conveyor belt having a thermoplastic elastomer cover material and a layer of fabric containing polyolefin yarns or a polyolefin fabric.

Brief description of the drawings:

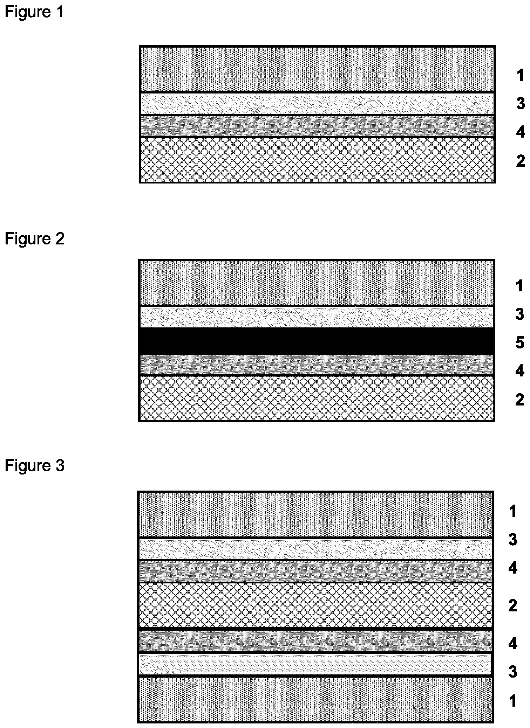

Figure 1 shows a schematic view of a conveyor belt according to the invention, wherein a cover material layer 1 is arranged on a fabric layer 2. Between the two layers, there is a two component adhesion laminate with a first adhesive layer 3 and second adhesive layer 4.

Figure 2 shows a schematic view of a conveyor belt according to another embodiment of the invention, which has substantially the same structure as the conveyor belt in Figure 1, except that a support layer 5 is arranged between the first and second adhesive layers 3 and 4.

Figure 3 is an embodiment of a conveyor belt according to the invention, which has two cover material layers 1 at the two outer surfaces thereof, and a fabric layer 2 arranged in the middle of the belt. The fabric layer 2 in sequence is covered by two layers of second adhesive 4 and first adhesive 3.

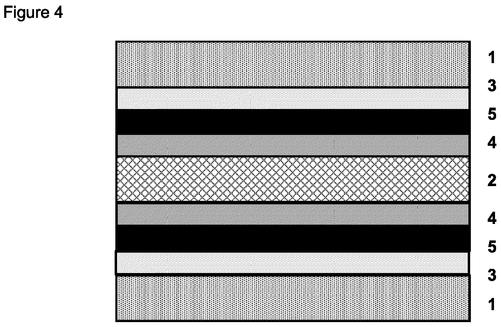

Figure 4 is an embodiment according to the invention, which is similar to the embodiment in Figure 3, except that respective support layers 5 are positioned between the first adhesive layers 3 and the second adhesive layers 4.

In the following, the present invention will further be described by means of some illustrating examples, which however should not be understood as limiting to the invention in any relevant manner.

Examples:

Example 1:

A laminate was produced from an UHMWPE-PP composite fabric and two Contilan® thermoplastic polyurethane elastomer layers with a thickness of 2 mm each and two adhesive films (= adhesion laminate) with a nylon film as a support layer, which has an upper layer of polyurethane hot melt adhesive on the side directed towards the thermoplastic polyurethane elastomer layer and a layer of modified polypropylene directed towards the UHMWPE-PP composite fabric.
The respective materials were attached to one another in a three step process, where in a first step the adhesive film was laminated to the fabric, then a second film was laminated to the other side of the fabric and subsequently, the elastomer layers were laminated to the sandwich structure of adhesive films and fabric at 130°C for 5 Min. The pre-lamination of fabric and adhesive film was effected by the conditions as indicated in the below table 1. The resulting laminates where then investigated according to ISO 11339:2022 (180° peeling) to determine the peel strength. The lamination conditions, as well as the peel strength determined in the investigations is given in the below table 1.

Table 1

|  | Sample 1 | Sample 2* | Sample 3* | Sample 4 | Sample 5 |
|---|---|---|---|---|---|
| Press temp. [°C] | 210 | 210 | 210 | 230 | 230 |
| Pressure | 4 | 4 | 6 | 4 | 4 |
| Press time [sec] | 20 | 20 | 20 | 5 | 5 |
| Peel strength [N/mm] | 5.2 | 6.6 | 8.5 | 4.8 | 4.5 |
| * Fabric was washed prior to use | | | | | |

In the above tests all of the laminates provided a peel strength of 4.5 N/mm or more, which indicated acceptable adhesion.

Example 2 (Reference)

The preparation of the laminate as described in example 1 was repeated except for the following differences: a different adhesive film having adhesives, which can be activated at lower temperature, was used. The temperature for the experiments was less than in Example 1 and the pressing time was longer. The results of these experiments are shown in the below table 2:

Table 2

| | Ref. Sample 1 | Ref. Sample 2[1] | Ref. Sample 3[2] | Ref. Sample 4[1,2] | Ref. Sample 5[1,2,3] |
|---|---|---|---|---|---|
| Press temp. [°C] | 130 | 130 | 130 | 130 | 130 |
| Pressure | 4 | 4 | 4 | 4 | 4 |
| Press time [sec] | 240 | 240 | 240 | 240 | 240 |
| Peel strength [N/mm] | 1.2 | 1.7 | 1.2 | 1.7 | 2.7 |

1 = Fabric was washed prior to use; 2 = Fabric was plasma treated prior to use; 3 = a primer was applied on the fabric prior to use

In the above tests, all of the laminates provided a peel strength of significantly less than 4.5 N/mm, which indicated inacceptable adhesion.

Example 3

The preparation of the laminate as described in example 1 was repeated except for the following differences: The adhesive film was prelaminated to the UHMWPE-PP composite fabric by blowing the adhesive layer with a hot air blower from a distance of 10 mm at an air flow of 50% (2700 W) and by subsequently guiding the prelaminate through a hot and a cold roller. As in Example 1, the fabric was not washed or plasma treated and used without primer. The processing conditions and peel strength values obtained in this test for the laminated products are given in the below table 3.

Table 3

| | Sample 6 | Sample 7 | Sample 8 | Sample 9 |
|---|---|---|---|---|
| Speed [m/min] | 0.8 | 0.8 | 0.8 | 1.0 |
| Temperature heat fan [°C] | 550 | 550 | 450 | 450 |
| Temperature hot roller [°C] | 80 | 120 | 80 | 120 |
| Temperature cold roller [°C] | 23 | 23 | 23 | 23 |
| Peel strength [N/mm] | 4.5 | 10.5 | 9.3 | 5.7 |

As in the above example 3, all of the laminates provided a peel strength of 4.5 N/mm or more, which indicated acceptable adhesion.

List of reference signs

1    cover material layer
2    fabric layer
3    adhesive layer 1
4    adhesive layer 2
5    support layer

**Claims**

1. A conveyor belt comprising a fabric layer containing polyolefin yarns or a polyolefin fabric, a layer of thermoplastic elastomer cover material, and an adhesion laminate bonding both materials together, wherein the adhesion laminate comprises at least two components, which are arranged as respective layers.

2. Conveyor belt according to claim 1, wherein the thermoplastic elastomer is selected from thermoplastic polyolefin, thermoplastic vulcanizate, ethylene acrylate rubber (AEM), acrylate rubber (ACM), preferably in combination with polyamide and thermoplastic polyurethane elastomer.

3. Conveyor belt according to claim 2, wherein thermoplastic elastomer is a thermoplastic polyurethane elastomer which is constituted from TDI and/or MDI and a least one polymeric polyol selected form polyester polyols, preferably on the basis of adipic acid, and polyether polyols, preferably on the basis of polytetrahydrofurane.

4. Conveyor belt according to claim 1 or 2, where the fabric layer comprises yarns of polyethylene with a molecular weight Mw of from 2,000,000 to 6,000,000 g/mol in warp direction and yarns of polypropylene in weft direction or yarns of polyethylene with a molecular weight Mw of from 2,000,000 to 6,000,000 g/mol in both warp and weft direction.

5. Conveyor belt according to any one of the preceding claims, wherein the adhesion laminate comprises three layers with an inner support layer and outer adhesive layers, preferably wherein the adhesive layer, which is oriented towards the thermoplastic elastomer, comprises a polyurethane adhesive and the adhesive layer, which is oriented towards the polyolefin yarns or polyolefin fabric comprises polypropylene or a modified polypropylene.

6. Conveyor belt according to any one of the preceding claims, wherein the components or adhesive layers have a melting point less than 300°C, preferably less than 280°C, and more preferably less than 250°C.

7. Conveyor belt according to any one of claims 5 or 6, wherein the inner support layer is composed of a material having a melting point, which is at least 10°C, preferably at least 20°C and more preferably at 25 to 50°C higher than the melting point of the components in the outer adhesive layers and/or wherein the inner support layer is based on polyamide, preferably polyamide selected from polyamide 6, polyamide 6.6, polyamide 6.9, polyamide 6.12, polyamide 11, polyamide 12, polyamide 4.6, polyamide 6.12 and polyamide 10.10, more preferably selected from polyamide 6, polyamide 6.6 and polyamide 6.12.

8. Conveyor belt according to any one of the preceding claims, wherein the belt comprises a middle fabric layer containing polyolefin yarns or a polyolefin fabric, and outer layers of thermoplastic elastomer cover material on both sides thereof, wherein the respective layers are bonded to each other with respective adhesion laminates comprising at least two components, which are arranged as respective layers.

9. Conveyor belt according to any one of the preceding claims, wherein the peel strength between the thermoplastic elastomer cover material and the fabric containing polyolefin yarns or a polyolefin fabric is at least 3,5 N/mm, preferably at least 4.0 N/mm and more preferably in the range of 4.2 to 20 N/mm.

10. A process for the production of a conveyor belt, in particular a conveyor belt according to any one of claims 1 to 9, comprising the steps:

    i) providing a thermoplastic elastomer cover material;
    ii) providing a fabric containing polyolefin yarns or a polyolefin fabric;
    iii) positioning an adhesion laminate comprising at least two components, which are arranged as respective layers, between the thermoplastic elastomer cover material and the fabric containing polyolefin yarns or a polyolefin fabric;
    iv) attaching the thermoplastic elastomer cover material to the fabric containing polyolefin yarns or polyolefin fabric by lamination.

11. Process for the production of a conveyor belt, in particular a conveyor belt according to any one of claims 1 to 9, comprising the steps:

    i) providing a thermoplastic elastomer cover material;
    ii) positioning an adhesion laminate comprising at least two components, which are arranged as respective layers, on the thermoplastic elastomer cover material and attaching the adhesive laminate to the thermoplastic elastomer cover material by lamination to provide a first composite laminate;
    iii) positioning a fabric containing polyolefin yarns or a polyolefin fabric over the adhesive side of the first composite laminate;
    iv) laminating the fabric to the first composite laminate to provide a second composite laminate, or wherein the process comprises the steps:

        a) providing a fabric containing polyolefin yarns or a polyolefin fabric;
        b) positioning an adhesion laminate comprising at least two components, which are arranged as respective layers, on the fabric containing polyolefin yarns or a polyolefin fabric and attaching the adhesive laminate to the fabric containing polyolefin yarns or a polyolefin fabric by lamination to provide a first composite laminate;

c) positioning thermoplastic elastomer cover material over the adhesive side of the first composite laminate;
d) laminating the fabric to the first composite laminate to provide a second composite laminate.

12. Process according to any one of claims 10 or 11, wherein the thermoplastic elastomer cover material, the fabric containing polyolefin yarns or a polyolefin fabric and the adhesion layer are provided as continuous strands and wherein the lamination process is continuous and/or wherein the fabric, prior to attachment to the adhesion layer, is treated by plasma-treatment, corona-treatment, heat-treatment, or flame treatment.

13. Process according to any one of claims 10 to 12, wherein the lamination is performed at a temperature of about 180 to 250°C, preferably of about 200 to 240°C and more preferably of about 210 to 230°C and/or wherein the lamination is performed at a pressure of from 3 to 7 bar and preferably from 3.5 to 6 bar and/or wherein for lamination the layers are pressed together for a time of from 2 to 60 sec and preferably of from 4 to 30 sec.

14. Process according to claims 10 to 13, wherein the lamination of the fabric containing polyolefin yarns or a polyolefin fabric and the adhesion laminate is effected by

i) blowing the adhesive layer with a gas at a temperature of at least 300°C, preferably a temperature of from 350 to 600°C,
ii) guiding an arrangement of the adhesive laminate and the fabric containing polyolefin yarns or a polyolefin fabric through a first lamination roller at a temperature of 50°C to 180°C, preferably 80°C to 150°C, and
iii) subsequently guiding the arrangement through a second lamination roller at a temperature of from 10 to 30° and preferably 20 to 25°C.

15. Use of an adhesion laminate, wherein the adhesion laminate comprises at least two components, which are arranged as respective layers, preferably, wherein the adhesion layer comprises three layers with an inner support layer and outer adhesive layers, to prepare a conveyor belt having a thermoplastic elastomer cover material and a layer of fabric containing polyolefin yarns or a polyolefin fabric.

Figure 1

1
3
4
2

Figure 2

1
3
5
4
2

Figure 3

1
3
4
2
4
3
1

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021188760 A1
- US 63218500 B
- WO 2023180515 A1
- EP 0504954 A1